(19) Europäisches Patentamt
European Patent Office
Office européen des brevets

(11) **EP 4 318 332 A1**

(12) **EUROPEAN PATENT APPLICATION**

(43) Date of publication:
**07.02.2024 Bulletin 2024/06**

(21) Application number: **23169040.5**

(22) Date of filing: **20.04.2023**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 EP 22188171**

(71) Applicant: **Kipu Quantum GmbH**
**76137 Karlsruhe (DE)**

(72) Inventors:
• **SOLANO, Enrique**
  **10405 Berlin (DE)**
• **HEGADE, Narendra**
  **560099 Karnataka (IN)**

(74) Representative: **Hoppe, Georg Johannes**
**Darani Anwaltskanzlei**
**Hohenzollerndamm 117**
**14199 Berlin (DE)**

(54) **A COMPUTER-IMPLEMENTED METHOD TO GENERATE QUANTUM ALGORITHMS**

(57) The invention pertains to a method for providing a digital quantum algorithm comprising the steps of:
a) Providing an analog adiabatic quantum algorithm that includes a Hamiltonian function (Hamiltonian Operator) that solves a given problem,
b) Adding at least one approximated counterdiabatic (CD) term to the Hamiltonian function of the analog quantum algorithm to obtain a counterdiabatic-enhanced (CD) adiabatic quantum algorithm, and
c) Digitizing the counterdiabatic-enhanced adiabatic adiabatic quantum algorithm from step b) to obtain a digital quantum algorithm.

The invention leads to a reduction in the number of qubits, quantum gates, and operations needed on a noisy intermediate scale quantum (NISQ) computer with digital and analog hardware.

Figure 1

## Description

The invention pertains to computer-implemented methods to generate high-performance quantum algorithms. The method refers to quantum algorithms in noisy intermediate scale quantum (NISQ) hardware and uses software and/or hardware optimization.

Specifically, the invention pertains to a method for providing a digital quantum algorithm and/or to transforming an analog quantum algorithm into a digital quantum algorithm.

In certain embodiments the invention pertains to a method to solve Hamiltonian-based problems stemming from adiabatic solutions with digital and digital-analog quantum processors (in particular processors that have more than 50 qubits) and the system to do so, comprising digitized-counterdiabatic or digital-analog counterdiabatic quantum algorithms and the corresponding hardware.

In certain embodiments the invention pertains to a method for the reduction of two qubit gates in a processor.

## Description

The commercial digital quantum processors based on superconducting circuits have been introduced into the market by different companies, which belong to the so-called noisy intermediate-scale quantum (NISQ) devices (NISQ qubits are referred to as "noisy" qubits.) and their performance still faces multiple technical constraints. These constraints pose a great challenge when one tries to solve "real-world" problems, as only small-scale applications can be run.

During the current NISQ time, a plethora of hardware systems co-exist which in general will not be suited to allow for "general purpose quantum computing" at a scale and quality which allows to solve use cases with actual relevance for industry users, since appropriate algorithms are missing.

The invention allows to systematically develop NISQ algorithms for NISQ hardware.

The term NISQ algorithms refers to algorithms designed for quantum processors in the NISQ era. For example, the variational quantum eigensolver (VQE) or the quantum approximate optimization algorithm (QAOA) are hybrid algorithms that use NISQ devices but reduce the calculation load by implementing some parts of the algorithm in usual classical processors. These algorithms have been proven to recover known results in quantum chemistry and some applications have been suggested in physics, material science, data science, cryptography, biology and finance.

The invention is based on the principle of using a set of particular steps to adjust any basic, general purpose algorithm to the specifics of a given problem and a defined hardware core by compressing it and reducing "overhead" that is not necessary for solving the given specific problem.

The outcome of this method is an algorithm which is able to outperform general-purpose algorithms on the particular hardware core.

In a first aspect, the invention refers to a method for transforming an analog quantum algorithm into a digital quantum algorithm. Such a method comprises the steps of:

- a) Providing an (analog) adiabatic quantum algorithm that solves a given problem and that includes a Hamiltonian function (Hamiltonian Operator),

- b) Adding at least one approximated counterdiabatic (CD) term to the Hamiltonian function of the analog quantum algorithm to obtain a counterdiabatic-enhanced (CD) adiabatic quantum algorithm, and

- c) Digitizing the counterdiabatic-enhanced adiabatic quantum algorithm from step b) to obtain a digital quantum algorithm (in the form of a digitized-counterdiabatic QC (DCDQC) solution).

"Adiabatic" quantum computing refers to the kind of mapping of a given problem that is to be solved onto a computer. Specifically, it is known that adiabatic quantum computing, which is analog by default, is a universal paradigm of quantum computation. Therefore, even if there may be many ways of encoding a given problem, there is at least one that may be chosen for starting our protocol.

In certain embodiments of the invention, the at least one approximated counterdiabatic (CD) term in step b) is a local and/or a bi-local term.

In certain embodiments of the invention, at least one native gate of a given noisy intermediate-scale quantum (NISQ) platform and/or architecture are used in step c) of the method. A list of NISQ platforms are: (i) Neutral atoms, (ii) trapped ions (iii) photonic systems, (iv) superconducting qubits, (v) semiconductor qubits, (vi) quantum dots, (vii) NV centers in diamond, (viii) spin qubits, among others.

In quantum computing and specifically the quantum circuit model of computation, a quantum logic gate (or simply gate) is a basic quantum circuit operating on a small number of qubits. They are the building blocks of quantum circuits, like classical logic gates are for conventional digital circuits.

Unlike many classical logic gates, quantum logic gates are reversible. It is possible to perform classical computing using only reversible gates. For example, the reversible Toffoli gate can implement all Boolean functions, often at the cost of having to use ancilla bits. The Toffoli gate has a direct quantum equivalent, showing that quantum circuits can perform all operations performed by classical circuits.

Quantum gates are unitary operators, and are described as unitary matrices relative to some basis. Usually, the computational basis is used, which unless compared with something, just means that for a d-level quantum system (such as a qubit, a quantum register, or qutrits and qudits) the orthogonal basis vectors have been labeled.

Native gates can be implemented in a certain architecture as the fidelity of such native gates will be higher than that of non-native gates. Native gates refers to gates that are native to a given platform.

In certain embodiments of the method, the native gates and analog quantum operations are chosen from the group consisting of continuous sets of one-qubit and two-qubit gates, continuous sets of multiqubit gates, continuous sets of multiqubit interactions formed by geometric and topological arrays of qubits in 1D/2D/3D layouts, analog quantum devices involving linear and nonlinear cavities, discrete and continuous sets of modes, Markovian and Non-Markovian components, classical and quantum memristive devices, among others.

In certain embodiments of the method, in step c), a plurality of native gates of a NISQ quantum processor are used, i.e. at least two or more.

In certain embodiments of the method, in step c), the digitization includes the selection of at least one CD term from a group of lower-order CD terms.

The term "lower-order CD term" refers to the simplest mathematical structures within a variety of functional expansions be with perturbative or nonperturbative approaches.

In certain embodiments of the method, in step c), an optimization process is used to find the minimal number of needed gates from the plurality of native gates. The optimization process may be, for example, a circuit optimization or a genetic algorithm.

The step c) may depend on which host the algorithm will run on, i.e. whether trapped ions, photons, superconductors or semiconductors are used. Each host will have different native gates.

For example, trapped ions are typically arranged in a single line and one can have as gates nearest neighbor coupled qubits and they also allow for long range interactions of qubits, because they use an auxiliary system.

Photons can have scalable integrated photonic systems, which allows for scalability.

In certain embodiments of the invention, an optimization process is used to find the optimal gate sequence, in particular a circuit optimization or a genetic algorithm in step c).

In certain embodiments, the method may comprise the step of digitizing a time evolution operator (TEO). In certain embodiments, the method may comprise the step of decomposing the time evolution operator (TEO) into a product of matrix exponentials. There are several methods to digitize Time Evolution Operators (TEOs), all of them can be cast as equivalent in terms of the resulting digital quantum algorithms. In this invention, the digitization process that facilitates and optimizes the ulterior digital-analog quantum computing encoding is used. To that end, the applicability of our invention is adapted to the preselected analog quantum operations, also called analog blocks. Such preselection will have different use cases, ranging from a purely abstract algorithmic recommendation to design novel hardware layouts to just use the set of analog blocks provided by existing quantum computer architectures.

Certain embodiments of the method further comprise the step of performing a circuit optimization on a hardware system that is suitable for use in solving the given problem, in particular wherein the hardware system has more than at least 50 qubits.

In certain embodiments of the method, the at least one approximated counterdiabatic (CD) term is enhanced by the optimization of the physical interactions to produce different digital-analog CD terms, wherein the physical interactions are selected from the group consisting of: ions, photons, cold atoms, nitrogen vacancy (NV) centers and electron spins.

In particular, the method of the invention can be used for algorithms that solve a higher class of optimization problems, in particular within the class of combinatorial optimization problems. The applications for such algorithms are manifold and can pertain to applications in finance, logistics, chemistry, etc.

In another aspect, the invention refers to an algorithm obtained by a method as described herein. In certain embodiments, the algorithm is characterized by the presence of at least at least one approximated counterdiabatic (CD) term.

In another aspect, the invention refers to a method for providing a hardware system for running a digital quantum algorithm, comprising the step of implementing a digital quantum algorithm obtained by a method described herein on a hardware system.

In another aspect, the invention refers to a hardware system for running a digital quantum algorithm, obtainable by implementing a digital quantum algorithm obtained by a method described herein on a given hardware system.

In certain embodiments, the hardware system comprises:

an ion trap with at least 50 physical qubits;

photonic modes with at least 50 modes;

cold atoms with at least 50 physical qubits;

nitrogen vacancy (NV) centers with at least 50 physical qubits; and/or

spin qubits with at least 50 physical qubits.

In certain embodiments, the hardware system comprises a two-qubit gate with a fidelity of 95%, preferably more than 100 qubits with a fidelity of 99%.

In another aspect, the invention refers to a system, comprising

- an algorithm as described herein, and

- a hardware system as described herein.

In another aspect, the invention refers to a quantum processor, which has been altered by running an algorithm described herein. The quantum processor is operatively coupled to a memory that executes computer-executable components.

In certain embodiments of the invention, the approximated counterdiabatic (CD) terms are enhanced by the optimization of the physical interactions of the trapped ions, photons, etc. to produce the different CD terms in the digital-analog paradigm.

In certain embodiments of the invention the method is performed on a computer on which digital gates and analog gates exist at the same time, i.e. combination of digital operations and analog operations can be performed at the same time.

In digital hardware, 2 qubits interact and make a gate. In contrast, analog hardware requires massive coupling between the qubits, such as multi partied ("many qubit") gates), which requires a variation in the hardware used.

Hardware that host the digital analog design on a quantum computer requires capacities of 2 qubit gates (digital gates) but also the possibility of turning on many couplings at the same time for analog operations

In certain embodiments, squares; triangles, or hexagons are used for analog hardware implementations (co-design quantum computers), which allows for a matching between software and hardware). Du to this, the resulting algorithm is simple because the hardware is adapted to the need of the particular given problem to be solve.

Each problem will have an optimized algorithm, optimized hardware variation are geometric arrays of the qubits

For each problem, a different geometry (or "cell" structure) may be chosen as needed for each problem. This way, one achieves a perfect match between software and hardware.

In certain embodiments, the method of the invention may further comprise the step of performing a circuit optimization on a hardware system that is suitable for use to solve the given problem. It is preferred that the hardware system has more than 50 qubits.

In certain embodiments, the at least one approximated counterdiabatic (CD) term is enhanced by the optimization of the physical interactions to produce different digital-analog CD terms, wherein the physical interactions are selected from the group consisting of: ions, photons, cold atoms, nitrogen vacancy (NV) centers and electron spins.

The digital-analog CD terms are extensions of purely digital CD terms. They may need to be selected in different manners depending on the chosen problem that is to be solved. In some embodiments, the digitization process that facilitates and optimizes the ulterior digital-analog quantum computing encoding is used. To that end, the applicability of the invention is adapted to the preselected analog quantum operations, also called analog blocks. Such preselection will have different use cases, ranging from a purely abstract algorithmic recommendation to design novel hardware layouts to just use the set of analog blocks provided by existing quantum computer architectures.

In another aspect, the invention refers to an algorithm obtained by a method of the invention as described above and herein. Such an algorithm may be characterized by the presence of at least one approximated counterdiabatic (CD) term.

Such an algorithm is not a digital algorithm anymore, but a digital-analog algorithm. This means the algorithm uses continuous gates and/or analog components in the algorithm.

In another aspect, the invention refers to a method for providing a hardware system for running a digital quantum algorithm, comprising the step of:

- Implementing digital quantum algorithm obtained by a method of any of claims 1 to 7 on a hardware system.

In another aspect, the invention refers to a hardware system for running a digital quantum algorithm, obtainable by implementing a digital quantum algorithm obtained by a method of the invention as described herein on a hardware system.

In certain embodiments, such a hardware system comprises:

an ion trap with at least 50 physical qubits;
photonic modes with at least 50 modes
cold atoms with at least 50 physical qubits
nitrogen vacancy (NV) centers with at least 50 physical qubits; and/or
spin qubits with at least 50 physical qubits.

In certain embodiments, the hardware system comprises a two-qubit gate with a fidelity of 95%. In some embodiments, the hardware system comprises more than 100 qubits with a fidelity of 99%.

In another aspect, the invention refers to a system comprising

- a hardware-adjusted algorithm as described herein, comprising a step that performs a mapping of circuits to a given hardware topology and/or

- a step that performs at least one error mitigation technique and an adaption to the native physical gates.

In another aspect, the invention refers to a system comprising

- an algorithm of the invention as described herein, and

- a quantum hardware system which was modified to allow for digital-analog methods as described herein.

In another aspect, the invention refers to a quantum processor, which has been altered by the method of the invention described herein.

The method is limited to gate-based hardware setups of the following hardware paradigms - superconducting circuits, ion traps, photonic modes, neutral atoms (also known as cold atoms), NV centers, quantum dots (also known as spin qubits), topological qubits, electrons on Helium.

The method is further limited to systems with more 50 physical qubits, preferably more than 200 qubits.

The invention leads to an effective reduction in the number of qubits, quantum gates, and operations needed on a NISQ computer with digital and analog hardware.

In one aspect, the invention refers to a method of determining the optimal portfolio of assets, comprising any of the steps disclosed herein.

In one aspect, the invention refers to a computer program product comprising instructions which, when the program is executed by a computer, cause the computer to carry out the method or the algorithm disclosed herein.

In one aspect, the invention refers to data carrier signal carrying the computer program product described herein.

**Figures**

Further advantages, features and applications of the present invention are provided in the following detailed description and the appended figures:

**Figure 1:** Flow chart of a method of the invention.

**Figure 2:** Standard circuit decomposition using rotation gates and CNOT gates for the operators in equation 8.

**Figure 3:** Implementation of the 2-local operators in Eq. (8) using native cross-resonance gate in transmon based superconducting circuits.

**Figure 4:** Circuit implementation for the digitized-counterdiabatic evolution with two trotter steps. (a) circuit decomposition using standard gate set (b) circuit decomposition using the native CR gate.

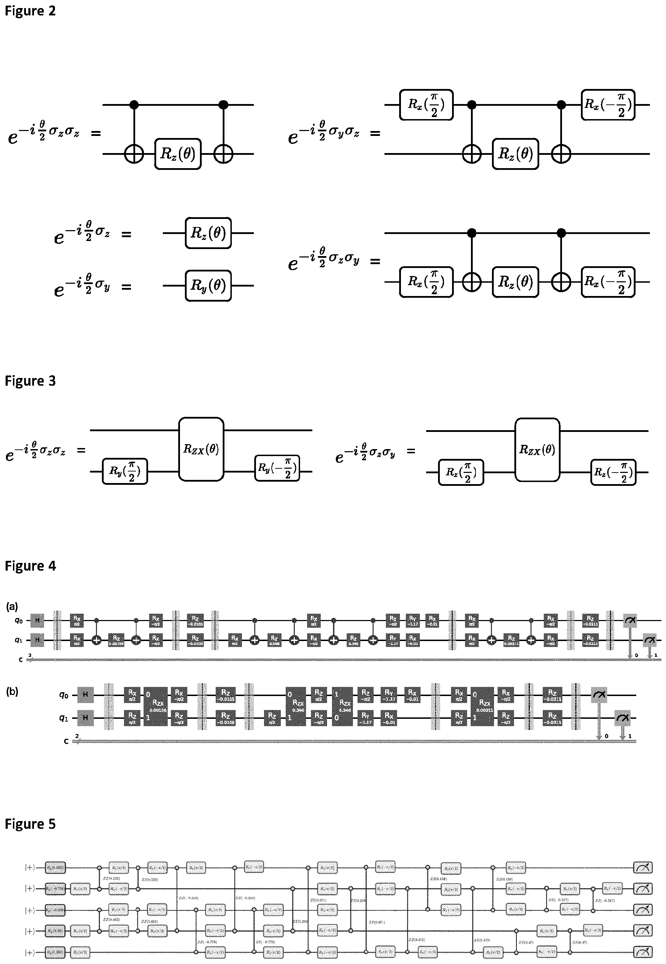

**Figure 5:** Circuit implementation for the digitized counterdiabatic evolution for 2 trotter steps. For the experimental implementation, two cloud-based quantum hardware 1 was used. The superconducting quantum processor by IBM consisting of 27 qubits and 2 trapped-ion quantum processor with 10 qubits by Quantinuum. Before sending the circuit to the hardware, the circuit optimization based on the hardware topology was performed manually, which reduces the number of SWAP gates. In addition, the qiskit transpiration function for further simplification of the circuit was used. The result obtained from the two hardware is shown.

**Figure 6:** Probability distribution obtained from trapped ion quantum processor and ideal simulator for the random Ising spin-glass system is compared. The result shows that the inclusion of the CD terms results in a higher success probability.

**Figure 7:** Probability distribution obtained from DCQF evolution for factoring the number 48567227 (26-bit) with 5 qubits. Total evolution time $T = 0.4$ and $dt = 0.1$ with and without including the CD term. The probability of obtaining the ground state using the DCQF protocol has a larger overlap with the ground state ($\approx 50\%$) for both ideal and experimental results in Quantinuum's trapped-ion quantum processor, where 1000 shots were made.

**Figure 8:** Final probability distribution obtained with DCQF for factoring the 48-bit integer 261980999226229 with 10 qubits on Quantinuum's trapped-ion quantum computer. The solution of the problem is encoded in the ground state of an all-to-all connected Ising spin-glass Hamiltonian. An approximate 2-local CD term is added to speed up the evolution. Both the theoretical and the experimental results show that the ground state |0100010010> is obtained with a higher success probability. We considered 2000 shots for this experiment.

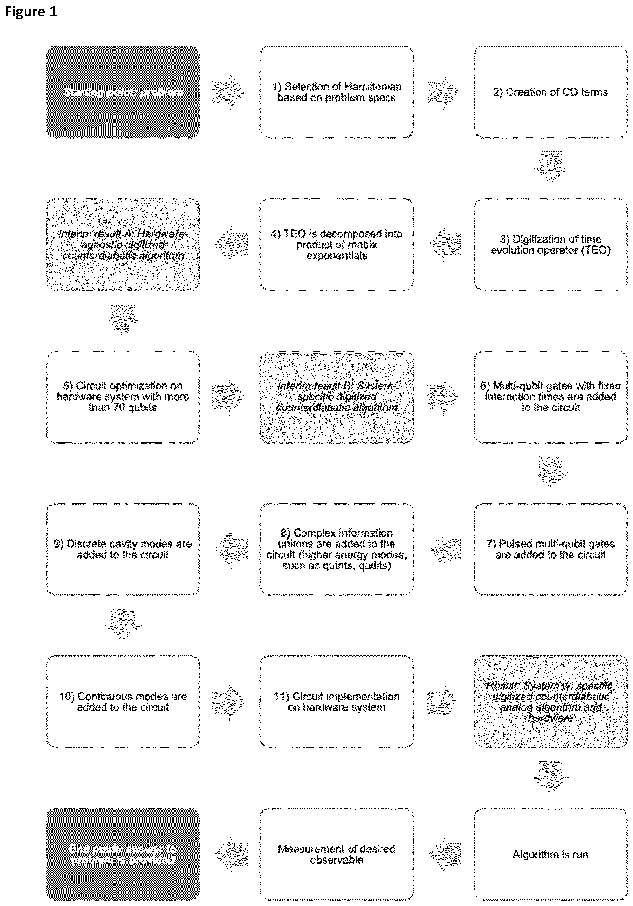

**Figure 1:** Various example embodiments are described more fully with reference to the accompanying drawings in which some example embodiments are illustrated.

One embodiment of the present invention is described with reference to figure 1. The method steps shown in figure 1 are as follows.

As the starting point, the problem to be solved is defined.

1. A Hamiltonian function (Hamiltonian operator) is chosen based on the problem to be solved.
2. Subsequently, at least one counterdiabatic (CD) term, preferably more than one, is/are created.
3. Next, the digitization of the time evolution operator (TEO) is performed. The step size is dt and the number of steps is T/dt.
4. The TEO is decomposed into a product of matrix exponentials. A method of digitization/approximation (product formulas) may be used. The total time evolution operator is decomposed into product of matrix exponentials. The result is a digital algorithm consisting of one- and two-qubit gates (qubit rotation, CNOT).

The previous steps lead to interim result A: a hardware agnostic digitized couterdiabatic algorithm is obtained.

5. Next, a circuit optimization is performed on the hardware system that is to be used for solving the problem, preferably the hardware system has at least 70 qubits.

The previous steps lead to interim Result B: A system-specific digitized counterdiabatic algorithm is obtained.

6. Optionally, multi-quibit gates with fixed interaction times are added to the circuit of the hardware system.
7. Then, optionally, pulsed multiqubit gates and analog quantum operations, as coming from nonlinear and non-Markovian devices, are added to the circuit.
8. Afterwards, complete information units are added to the circuit (in particular higher energy modes, such as qutirits and qudits).
9. Subsequently, discrete cavity modes are added to the circuit.
10. Then, continuous modes are added to the circuit.
11. Next, the circuit obtained is implemented on a hardware system. This may require the application of error mitigation techniques such as zero noise extrapolation, probabilistic error cancelation, and/or Clifford data regression techniques.

As a result of the preceding method steps, a system with a specific, digitized counterdiabatic analog algorithm and hardware adapted thereto is obtained.

12. Subsequently, the algorithm is run, i.e. the system is operated.
13. The system is measured to determine the desired observables. The desired observable is determined to solve the problem to be solved.
14. With the measured observable, the problem initially posed is solved.

The method is limited to gate-based hardware setups in particular of the following hardware systems: superconducting circuits, ion traps, photonic modes, neutral atoms (also known as cold atoms), NV centers, quantum dots (also known as spin qubits), topological qubits, and electrons on helium. An electron-on-helium qubit is a quantum bit for which the orthonormal basis states 10) and 11) are defined by quantized motional states or alternatively the spin states of an electron trapped above the surface of liquid helium.

The method is further limited in certain embodiments to systems with more than 50 or 70 physical qubits, preferably more than 200 qubits.

The method is further limited to systems with a two-qubit gate fidelity of at least 95%, preferably or at least 99%, more preferably of at least 99.9%.

The method relies on a novel combination of digitized counterdiabatic quantum computing. Of steps 1 to 11 as defined above, 6 are mandatory, and 5 are optional as described. The steps need to be executed in a particular order as described.

In certain embodiments of the invention, step 5 comprises two sub-steps, namely

5a) the mapping of circuits to the hardware topology and

5b) performing a gate optimization.

Mapping of the quantum circuit obtained in step 4 is performed due to the sparse connectivity, especially of superconducting quantum circuits, but also from other quantum computing hardware, such as photonics, NV centers or cold atoms. Qubit communication via SWAP gates (a gate swapping two qubits) accounts for the vast majority of overhead in quantum programs. A heuristic algorithm may be used to compute a minimal SWAP gate count, which is hardware-specific and not hardware agnostic.

Gate optimization may also be performed in the method. The practice of gate optimization may, in particular, be performed in combination with steps 6-11, but also in the context of steps 1-4. For this, quantum circuits are decomposed into the basis gate set of a quantum device, and the addition of SWAP gates needed to match hardware topology, conspire to increase the depth and gate count of quantum circuits. This may be achieved by optimization routines, for instance by combining or eliminating gates (e.g. term grouping, gate cancellation, etc.).

In certain embodiments, step 11 comprises two sub-steps, namely:

11a) an error mitigation and

11b) an adaption to native/physical gates.

Current quantum computers are noisy due to interactions with the environment, imperfect gate applications, state preparation, measurement errors, etc. The invention uses error mitigation in certain embodiments, which reduces these effects at the software level by compiling quantum programs. While error mitigation related to the measurement errors are known in the context of steps 1-4, its application is novel in relation to any of steps 6-11.

In certain embodiments, the invention comprises also the error-mitigation techniques of zero-noise extrapolation, probabilistic error cancellation, Clifford data regression and dynamical decoupling.

Adapting to native/physical gates relies on using non-standard gates. Instead of using the standard gates (CNOT, Hadamard), one can directly make use of the native gates to reduce the gate errors. One example in the context of this invention for IBM superconducting circuit quantum computers with IBMQ is using native cross-resonance gates rather than CNOTs for the time evolution.

Surprisingly, this method of the invention enables to use problem formulations that have been realized for analog quantum computers (e.g. commercialized by companies such as D-Wave) using digital quantum computers (gate-based hardware).

Moreover, in certain embodiments, the invention pertains to a method with a combination of steps 1-4 with either of steps 5, 6, 7, 8, 9 or 10 or any combination of steps 5, 6, 7, 8, 9 and 10.

**Examples**

**Example 1**

Example 1 of DACQC: Portfolio Optimization

A portfolio optimization problem is solved, where the decision-maker has to invest a budget of B among n assets. For each asset i, either a $B_i$ amount can be invested or none at all. The total investment should satisfy the condition,

$$\sum_i^n x_i B_i \leq B \qquad (1)$$

The total return from the entire portfolio is given by $R = \Sigma_i^n R_i$, where $R_i$ is the return from asset i if a budget of $B_i$ is allocated towards this asset. The expected return is calculated as $E(R) = \Sigma_i^n E(R_i)$. The variance of the total return is given by Var $(R) = \Sigma_{i,j=1}^n \text{Cov}(R_i, R_j)$, where Cov $(R_i, R_j)$ represents the covariance between $R_i$ and $R_j$. In the Morkovitz portfolio optimization, the task is to maximize the expected return while minimizing the risk or the variance for a given constraints. This problem can be formulated as

$$\min_{x_i \in 0,1} \theta_1 \sum_{i=1}^n -x_i E(R_i) + \theta_2 \sum_{i,j=1}^n x_i x_j \text{Cov}(R_i, R_j) + \theta_3 \left(\sum_{i=1}^n x_i B_i - B\right)^2 \qquad (2)$$

where the parameters $\theta_1$, $\theta_2$, and $\theta_3$ are the Lagrange multipliers that decide the relative importance of each term. The above quadratic function can be formulated as an Ising Hamiltonian given by

$$H_p = \sum_i^n h_i \sigma_i^z + \sum_{i<j}^{n-1} J_{ij} \sigma_i^z \sigma_j^z \qquad (3)$$

where $J_{ij}$ represents the interaction between the spins and $h_i$ denotes the local field strength. Finding the ground state of this Hamiltonian will give the optimal solution to the portfolio optimization problem. For that the adiabatic theorem is followed by starting with an initial state corresponding to the ground state of the Hamiltonian $H_i = -\Sigma_i^n h^x \sigma_i^x$ and evolve the system adiabatically towards the final Hamiltonian $H_p$, the evolution is given by

$$H_{ad}(\lambda) = (1-\lambda)H_i + \lambda H_p \qquad (4)$$

To speed up this adiabatic evolution, we modify by introducing an additional counterdiabatic Hamiltonian (Step 2). In order to calculate the CD terms, we use the nested commutator method given by

$$A_\lambda^{(l)} = i \sum_{k=1}^l \alpha_k(t) \underbrace{[H_{ad}, [H_{ad}, \dots \dots [H_{ad}, \partial_\lambda H_{ad}]]]}_{2k-1} \qquad (5)$$

Here, $A_\lambda^{(l)}$ is the adiabatic gauge potential. For simplicity we consider the first-order term (l=1). The total Hamiltonian, by including the CD term, takes the form

$$H(t) = (1-\lambda)H_i + \lambda H_p + 2\dot{\lambda}h^x\alpha_1(t)\left[\Sigma_i^N h_i^z \sigma_i^y + \Sigma_{i,j} J_{ij}\left(\sigma_i^y \sigma_j^z + \sigma_i^z \sigma_j^y\right)\right] \qquad (6)$$

where the CD coefficient $\alpha(t)$ is calculated by variational minimization. The time evolution of the Hamiltonian is given by

$$|\psi(T)\rangle = \mathcal{T}e^{-i\int_0^T H(t)dt}|\psi(0)\rangle = U(0,T)|\psi(0)\rangle. \qquad (7)$$

For the gate-model implementation of the evolution, we write the total Hamiltonian as sum of 2 local terms, i.e. $H(t) = \Sigma_j \, c_j(t)H_j(t)$ (Step 3). The total time was discretized into M parts with step size $\Delta t = T/M$. Using first order Trotter-Suzuki formula, the time evolution operator is approximated as (Step 4)

$$U_{\mathrm{dig}}(0,T) = \prod_{k=1}^{M} \prod_{j} \exp\left\{-i\Delta t c_j(k\Delta t)H_j\right\}. \qquad (8)$$

The product of matrix exponentials in the above equation can be decomposed using single-qubit rotation gates and CNOT gates. Standard circuit decomposition for the operators in is shown in Fig. 2. A transmon-based quantum processor with fixed-frequency superconducting qubits is used for the experimental implementation of the problem. These devices support parametrized Cross-Resonance (CR) gates. Instead of using the standard quantum logic gates, we use the native CR gate for efficient hardware implementation. This CR gate implements a parametric 2-qubit $Z \otimes X$ interaction, and the corresponding unitary matrix is given by

$$R_{ZX}(\theta) = e^{-i\frac{\theta}{2}\sigma_x\sigma_z} = \begin{pmatrix} \cos\left(\frac{\theta}{2}\right) & 0 & -i\sin\left(\frac{\theta}{2}\right) & 0 \\ 0 & \cos\left(\frac{\theta}{2}\right) & 0 & i\sin\left(\frac{\theta}{2}\right) \\ -i\sin\left(\frac{\theta}{2}\right) & 0 & \cos\left(\frac{\theta}{2}\right) & 0 \\ 0 & i\sin\left(\frac{\theta}{2}\right) & 0 & \cos\left(\frac{\theta}{2}\right) \end{pmatrix}$$

In **Fig. 3,** the decomposition of the 2-local operators using native cross-resonance gate $R_{zx}(\theta)$ is shown. Implementing each 2-local operator corresponding to the system's time evolution requires two CNOTs and rotation gates using standard decomposition. However, the same operation can be done with a single CR gate and rotation gates. It is concluded that using the native gates reduces the total schedule duration by a factor of two and also helps to reduce the gate error.

### Example 2

Example 2: Finding the ground state of Hydrogen molecule ($H_2$).

In the first quantization notation with Born-Oppenheimer approximation, the Hamiltonian of $H_2$ (Step 1)

$$H\left(\vec{r}_1,\vec{r}_2 \mid \vec{R}_1,\vec{R}_2\right) = \mathcal{E}_{\mathrm{nucl}}\left(R\right) + \sum_{i=1,2} \frac{\vec{p}_i^2}{2m} - \sum_{i,j=1,2} \frac{e^2}{4\pi\varepsilon_0\left|\vec{r}_i - \vec{R}_j\right|} + \frac{e^2}{4\pi\varepsilon_0\left|\vec{r}_1 - \vec{r}_2\right|}, \qquad (9)$$

where $\varepsilon_{\mathrm{nucl}}\left(R\right)$ corresponds to the nuclear term (which is considered as a constant term under the Born-Oppenheimer approximation) and it depends on the inter nuclear distance $R = |\vec{R}_1 - \vec{R}_2|$. The second term represents the kinetic energy of the electrons with momentum $\vec{p}_i$. The last two terms are for the potential energy corresponding to the Coulomb attraction and repulsion between nuclei-electrons and electron-electron, where $\vec{r}_i$ and $\vec{R}_i$ denotes the coordinates of electrons and nuclei, respectively. In the second quantized notation the above Hamiltonian can be written as

$$H = \mathcal{E}_{\mathrm{nucl}} + \sum h_{ij}a_i^+ a_j + \sum h_{ijkl}a_i^+ a_j^+ a_k a_l, \qquad (10)$$

where $h_{ij}$ and $h_{ijkl}$ denotes the one and two-electron integrals. And, the creation $\left(a_i^+\right)$ and annihilation ($a_j$) operators

follow the fermionic anti-commutation relations, i.e., $\left[a_i, a_j^+\right]_+ = \delta_{i,j}$ and $[a_i, a_j]_+ = 0$. To convert the fermionic operators to Pauli operators, the Bravyi-Kitaev transformation is followed which results in a simplified two qubit Hamiltonian given by

$$H_p = k_0 + k\sigma_1^z + k\sigma_2^z + k_{12}\sigma_1^y\sigma_2^y, \qquad (11)$$

where the parameters $\{k_0, k, k_{12}\}$ are function of inter-nuclear distance R. As an example, R=0.04 Å is considered, and the parameters are given by $\{k_0 = 10.08E_h, k = -1.055E_h, k_{12} = 0.1557E_h\}$, where $E_h \approx 27.2\text{eV}$. To find the ground state of Hamiltonian the digitized-counterdiabatic protocol is followed. The initial Hamiltonian is chosen as

$$H_i = -\sum_i^n h^x\sigma_i^x.$$

The corresponding CD term is calculated (Step 2) from the first order nested commutator, i.e., $H_{CD} = \dot{\lambda}A_\lambda^1$. Here

$$A_\lambda^1 = \alpha_1(t)\left[0.3114\left(\sigma_1^z\sigma_2^y\right) + \sigma_1^y\sigma_2^z + 2.11\left(\sigma_1^y + \sigma_2^y\right)\right], \alpha_1(t) = -\frac{0.1124}{\lambda^2 - 0.9564\lambda + 0.4782}.$$

The digitized time evolution operator for the total Hamiltonian $H(t) = (1 - \lambda)H_i + \lambda H_p + (\dot{\lambda})A_\lambda$ is approximated using Suzuki-Trotter formula as

$$U_{\text{dig}}(0, T) = U_{\text{dig}}\left((M-1)\Delta t, M\Delta t\right)\ldots U_{\text{dig}}(\Delta t, 2\Delta t)U_{\text{dig}}(0, \Delta t)|++\rangle. \qquad (12)$$

For one trotter step, the unitary operator takes the form,

$$U(0, \Delta t) \approx \prod_{j=1}^{2} e^{-i\theta_x(\Delta t)\sigma_j^x\Delta t}e^{-i\theta_z(\Delta t)\sigma_j^z\Delta t}e^{-i\theta_{yy}(\Delta t)\sigma_j^y\sigma_{j+1}^y\Delta t}e^{-i\theta_y(\Delta t)\sigma_j^y}e^{-i\theta_{zy}(\Delta t)\sigma_j^z\sigma_{j+1}^y\Delta t}e^{-i\theta_{yz}(\Delta t)\sigma_j^y\sigma_{j+1}^z\Delta t}. \quad (13)$$

Here the angles

$$\theta_x(\Delta t) = (\lambda(\Delta t) - 1), \theta_z(\Delta t) = k\lambda(\Delta t), \theta_{yy}(\Delta t) = k_{12}\lambda(\Delta t), \theta_y(\Delta t) = 2k\dot{\lambda}(\Delta t)\alpha_1(\Delta t), \theta_{zy}(\Delta t) = \theta_{yz}(\Delta t) = 2k_{12}\dot{\lambda}(\Delta t)\alpha_1(\Delta t)$$

In **Fig. 4,** the quantum circuit implementing the digitized-counterdiabatic evolution for one trotter step is shown. In **Fig. 4 (a)** depicts the circuit decomposition using standard quantum logic gates, and **Fig. 4 (b)** shows the same using native CR gate.

**Further Examples**

Example: Selection of the Hamiltonian

The method described herein can be readily applied on all problems that can be described as QUBOs (quadratic unconstrained binary optimization).

Example: Selection of the Hamiltonian in Step 1 The method described herein can in be readily applied on all problems that can be described as QUBOs.

Example: Step 2 (Implementation of the method on a cold atom quantum computer). CD terms can be constructed by using the nested commutator method.

Example: Solving the Ising spin glass model for combinatorial optimization problems by combination of the mandatory steps 1 - 6 on ion traps & superconducting circuits

For the experimental demonstration of the DCQO algorithm on quantum computers, we consider the Ising spin-glass Hamiltonian with all-to-all interaction. We study one random instance with interaction strength and the local fields given by

J = [0.61390018, 0.36505868, -0.85754, 0.18686186, -0.84099514, 0.68564092, 1.24977233, 1.22378985, -2.06312973, 1.2451555]

hz = [0.01242658, -2.00234826, -1.05796109, 0.74127287, 0.95590707].

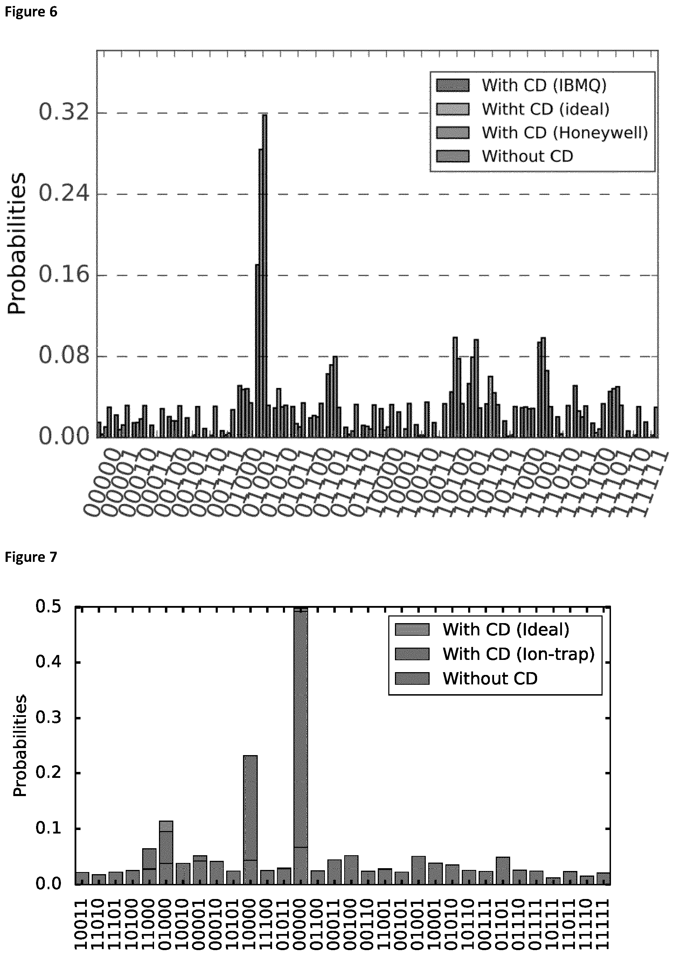

For the digitized counterdiabatic evolution, we consider the time step dt = 0.05, T=0.1 with two trotter steps. And the number of shots is 8192 for the implementation on IBMQ and 600 for quantinuum. The circuit implementation is shown in Fig. 5. The probability distribution obtained from trapped ion quantum processor and ideal simulator for the random Ising spin-glass system is compared in Fig. 6. The result shows that the inclusion of the CD terms results in a higher success probability.

Example: Experimental realization with step 3.1 on an ion trap

This example is built on top of the aforementioned example. This requires analysis of the quantum hardware to identify natural interactions between qubits, coherence time on a single qubit level, response time and manipulability. This allows for the implementation of multi-qubit gates, which effectively replace two-qubits gates (roughly n two-qubit gates are being replaced using a single n-qubit gate). An example for ion traps is the Molmer-Sorensen gate, which is well-known to expert, but not yet in the context of steps 1-5 of this invention.

Example: Experimental realization with step 3.2 on superconducting circuits

This example is built on top of the aforementioned example. To implement steps 6 and 7 on superconducting circuits, the hardware setup is being modified by applying well-known hardware fabrication techniques to manufacture revised quantum chips with implementation geometry optimization of the qubits (1D or 2D) for efficient implementation of multiqubit gates/interactions.

Example: Experimental realization with step 3.3 with ion traps. This is achievable by using motional modes in the trapped ions.

Example: Experimental realization with step 3.3 with superconducting circuits. This is achievable by using open transmission lines in superconducting circuits.

Example: Step 6 (Implementation of the method on a cold atom quantum computer). This requires the application of error mitigation techniques such as zero noise extrapolation, probabilistic error cancelation, as well as Clifford data regression techniques

Example: Experimental realization of steps 6 and 7.

This requires analysis of the quantum hardware to identify natural interactions between qubits, coherence time on a single qubit level, response time and manipulability. This allows for the implementation of multi-qubit gates, which effectively replace two-qubits gates (roughly n two-qubit gates are being replaced using a single n-qubit gate). An example for ion traps is the Molmer-Sorensen gate. In an optional step, the hardware setup is being modified by applying well-known hardware fabrication techniques to manufacture revised quantum chips with implementation geometry optimization of the qubits (1D or 2D) for efficient implementation of multiqubit gates/interactions.

Example: Experimental realization of step 9 with ion traps.

This is achievable by using motional modes in the trapped ions

Example: Experimental realization of step 10 with superconducting circuits.

This is achievable by using open transmission lines in superconducting circuits.

Example: Step 11 (Implementation of the method on a cold atom quantum computer)

This requires the application of error mitigation techniques such as zero noise extrapolation, probabilistic error cancelation, as well as Clifford data regression techniques.

Example: Calculating models involving interacting fermions and bosons for chemical modeling, material modeling, condensed matter and high-energy physics using itemized of Steps 1-6

1) Selection of the suitable Hamiltonian for the adiabatic quantum computing solution in a problem involving coupled spins, fermions, and bosons usable for applications in chemistry, material sciences, condensed matter or high-energy physics). Here, the following considerations need to be taken into account:

1.a) Spin particles are encoded in qubits, qutrits, and qudits.

1.b) Bosonic particles are encoded in qubits, qutrits, or qudits, while there is also the possibility of direct encoding on bosonic systems as photons, vibrations, or modes. The latter can turn discrete bosonic variables encoded into discrete bosonic systems or continuous bosonic variables encoded into continuous bosonic systems.

1.c) Fermionic particles are mapped first onto spin variables via Jordan-Wigner or Braviy-Kitaev transformations and then encoded onto qubits, qutrits, or qudits.

2) Selection of the CD terms, or combination of them, via a suitable method that minimizes the complexity of the algorithm and maximizes the accuracy of the result.

3) Discretization in temporal steps of the targeted Hamiltonian dynamics.

4) Mapping of the components stemming from item (3) into digital steps, analog blocks, and digital-analog structures using a suitable method that minimizes the complexity of the algorithm and maximizes the accuracy of the result.

5) Optimization of the resulting algorithm at both logical and physical level. This means using techniques to reduce the circuit depth at the level of logical quantum gates and also when transpiled to the level of physical gates.

6) The final algorithm may still be enhanced via error mitigation methods, finding the compromise between the added overhead of hardware resources with the enhanced accuracy of the solution.

Example: Digitized-counterdiabatic quantum factorization
A 48-bit integer using 10 trapped-ion qubits was factorized on a Quantinuum's quantum computer.
It was shown that one can encode the integer factorization problem on a quantum computer with $\mathcal{O}(\log N / \log\log N)$ qubits, i.e., sublinear in the bit length of an integer N (Bao Yan et al., arXiv:2212.12372 (2022). The time complexity of this hybrid classical-quantum algorithm is unknown and hard to estimate. The authors combine Babai's algorithm with the quantum approximate optimization algorithm (QAOA) to solve the closest vector problem on a lattice. The resulting problem reduces to an optimization problem whose solution is encoded in the ground state of an Ising spin-glass Hamiltonian. Even though the authors experimentally factorize a 48-bit number on a superconducting quantum computer with a large enough success probability, its scalability for larger tasks remains unknown.
Here, we take up the classical preprocessing part of their work and enhance the quantum part of the algorithm. In this embodiment, the invention refers to a non-hybrid approach, called digitized-counterdiabatic quantum factorization (DCQF), to tackle the same problem outperforming QAOA techniques. In this sense, DCQF may allow us to factorize larger numbers, possibly up to RSA-64 and RSA-128, with current noisy intermediate-scale quantum (NISQ) computers. This report explores the possibility of factoring larger numbers with compressed algorithms in given quantum computers, rather than proving any scalability of computational resources.
The quantum part of the factorization algorithm consists in finding the ground state on an Ising spin-glass Hamiltonian with all-to-all connectivity. The general form of such Hamiltonian is given by

$$H_{Ising} = \sum_{i<j} J_{ij}\, \sigma_i^z \sigma_j^z + \sum_i h_i\, \sigma_i^z. \qquad (14)$$

Here, $\sigma_i^z$ is the Pauli-z matrix, $J_{jj}$, and $h_i$ are the interactions between the spins and local field acting on a site *i,* respectively.
In the worst-case scenario, finding the ground state of an Ising spin-glass problem is known to be non-deterministic polynomial-time hard (NP-hard). Along these lines, even with quantum computers, it is unlikely to solve this problem in polynomial time, though one could expect a polynomial quantum speed-up. There are various approaches to tackle this problem on a quantum computer, using adiabatic quantum computation (AQC), quantum annealing (QA), QAOA, among others. Despite the vast interest in QA and QAOA for solving combinatorial optimization problems, we still need to learn about their quantum speed-up for large-scale problems of industrial relevance. Here, we will consider digitized-counterdiabatic quantum computing (DCQC) applied to the factorization problem, which to overcome some of the challenges faced by AQC and to outperform QAOA.
Counterdiabatic (CD) protocols are known to speed up the adiabatic evolution by suppressing the non-adiabatic transitions. The recent developments in this field have opened the possibility of applying these techniques to AQC. Even with approximate counterdiabatic terms, a drastic enhancement can be obtained for most problems. However, the experimental implementation of the CD protocols on analog quantum computers is a challenging task. Especially, while solving classical optimization problems, the CD terms are shown to be non-stoquastic, and the current quantum annealers do not have the capability to consider such problems. In order to overcome these difficulties, DCQC was experimentally tested. Even the simplest approximate CD protocols can offer polynomial scaling enhancement in the ground state success probability, as compared with the finite time adiabatic quantum optimization .

*DCQF algorithm.*

In order to find the ground state of Hamiltonian in Eq. [eq14], we start with an adiabatic Hamiltonian defined as

$$H_{ad}(\lambda) = [1 - \lambda(t)]H_i + \lambda(t)H_{Ising}, \qquad (15)$$

where $\lambda(t)$ is a scheduling function which defines the path between $H_i$ and $H_{Ising}$. We choose $\lambda(t) = \sin^2\left[\frac{\pi}{2}\sin^2\left(\frac{\pi t}{2T}\right)\right]$ such that its first and second derivatives vanish at the initial and final time. This is an optional boundary condition for the CD protocol. The initial Hamiltonian is chosen as $H_i = -\sum_i \sigma_i^x$ such that its ground state $|+\rangle^{\otimes n}$ can be easily prepared.

In order to speed-up the adiabatic evolution, we introduce an approximate CD term as $H(\lambda) = H_{ad}(\lambda) + \dot{\lambda}A_\lambda^{(l)}$.

Here, $A_\lambda^{(l)}$ is the approximate adiabatic gauge potential (AGP) obtain from nested commutator expansion given in Eq. [eq5]. The CD coefficients $\alpha_k(\lambda)$ can be obtained by minimizing the action $S = \text{Tr}[G_\lambda^2]$, where $G_\lambda = \partial_\lambda H_{ad} + i\left[A_\lambda^{(l)}, H_{ad}\right]$ is a Hermitian operator. There are alternative approaches to deterministically obtain $\alpha_k(\lambda)$ by solving a set of linear equations. As we consider higher order expansion terms $l$, we get better approximations of the exact adiabatic gauge potential (AGP). However, for large $l$, we will get long-range multi-qubit interactions, resulting in large circuit depth. Therefore, here we set $l = 1$.

To show the performance of a DCQF algorithm, we consider the same Hamiltonians corresponding to factoring 26-bit and 48-bit numbers with 5 and 10 qubits, respectively. We start with the 26-bit number 48567227. The algorithm contains 3 parts: 1. Classical preprocessing. 2. Quantum algorithm. 3. Classical post processing of the data. After the classical preprocessing, the problem reduces to find the ground state of a 5-qubit Hamiltonian given by

$$\begin{aligned}
H_{5q} &= 781\mathbb{I} - 142\sigma_z^1 - 64\sigma_z^2 - 81\sigma_z^3 - 213\sigma_z^4 - 4.5\sigma_z^5 \\
&\quad -13.5\sigma_z^1\sigma_z^2 + 3.5\sigma_z^1\sigma_z^3 + 18\sigma_z^1\sigma_z^4 + 17.5\sigma_z^1\sigma_z^5 \\
&\quad -29\sigma_z^2\sigma_z^3 + 19.5\sigma_z^2\sigma_z^4 - 34\sigma_z^2\sigma_z^5 - 31.5\sigma_z^3\sigma_z^4 \\
&\quad -2.5\sigma_z^3\sigma_z^5 + 4.5\sigma_z^4\sigma_z^5 .
\end{aligned}$$

To solve this problem, we consider a simple local AGP $\tilde{A}_\lambda = \sum_i^{n=5} \beta_i(t)\sigma_i^y$, where the CD coefficient is calculated as $\beta_i(t) = h_i/2\left[(\lambda - 1)^2 + \lambda^2\left(h_i^2 + \sum_{j \neq i}^n J_{ij}^2\right)\right]$. The total Hamiltonian including the CD term is $H(\lambda) = [1 - \lambda(t)]H_i + \lambda(t)H_{5q} + \dot{\lambda}\tilde{A}_\lambda$. For a fast evolution, the CD term plays a dominant role so that $H(\lambda) \approx \dot{\lambda}\tilde{A}_\lambda$. Interestingly, the resulting Hamiltonian contains only local one-body terms.

To verify the performance of this local CD term, we digitized the time evolution using the first-order Trotter-Suzuki formula. We consider the total evolution time $T = 0.4$ and time step $dt = 0.1$, that is four Trotter steps. The resulting unitary operator is decomposed into a set of quantum gates. For experimental demonstration, we consider Quantinuum's 20-qubit trapped-ion processor and make use of their native gates. The final state of the system at the end of the evolution is extracted by measuring in the computational basis. In Fig. 7, the probability distribution obtained from both the ideal simulator and the experimental results are plotted. We notice that, even with the short evolution time, the CD protocol is able to find the ground state $|00000\rangle$ corresponding to the Hamiltonian of equation 3 with $\approx 50\%$ success probability from the ideal simulator, and 49.3% from the experiment. We remark that for Hamiltonians with $|h_i| >> |J_{ij}|$, even the local CD terms can provide a drastic enhancement in the ground state success probability. However, even for such simple instances, the result obtained using QAOA of the state of the art with $p = 3$ is not able to find the correct solution with > 30% success probability.

As a second example, factoring the 48-bit integer 261980999226229 using 10 qubits is considered. The Hamiltonian encoding the solution of the problem is obtained from Bao Yan et al. Unlike the previous case, here, the local fields $h_i$ and the interaction terms $J_{ij}$ have comparable magnitudes. Therefore, the first-order nested commutator in Eq. [eq5] is used to obtain the approximate CD terms. For a fair comparison with QAOA, we further truncate the number of 2-local terms in AGP to match the circuit depth of QAOA for each layer $p$.

$$H_{cd}^{(1)}(\lambda) = -4\dot{\lambda}\alpha_1(\lambda)\left[\sum_i h_i\,\sigma_i^y + \sum_{i<j}J_{ij}\,\sigma_i^z\sigma_j^y\right]$$

The resulting CD Hamiltonian is given by . The exact solution for the first-order CD coefficient $\alpha_1(\lambda)$ is given in the literature. As before, we consider fast evolution with

$$H(\lambda) \approx H_{cd}^{(1)}(\lambda)$$

. The total evolution time is $T = 0.4$ and time step $dt = 0.1$. Even though there are 4 Trotter steps, the CD term vanishes at $t = T$ due to the boundary condition $2(t = 0) = 2(t = T) = 0$. Also, the magnitude of the CD terms reduces rapidly after one Trotter step. So, effectively, the contribution to the time evolution comes from the first Trotter step, and one could discard the CD terms in the second and third Trotter steps with very small gate angles. The resulting time evolution operator contains in total 45 two-body interaction terms.

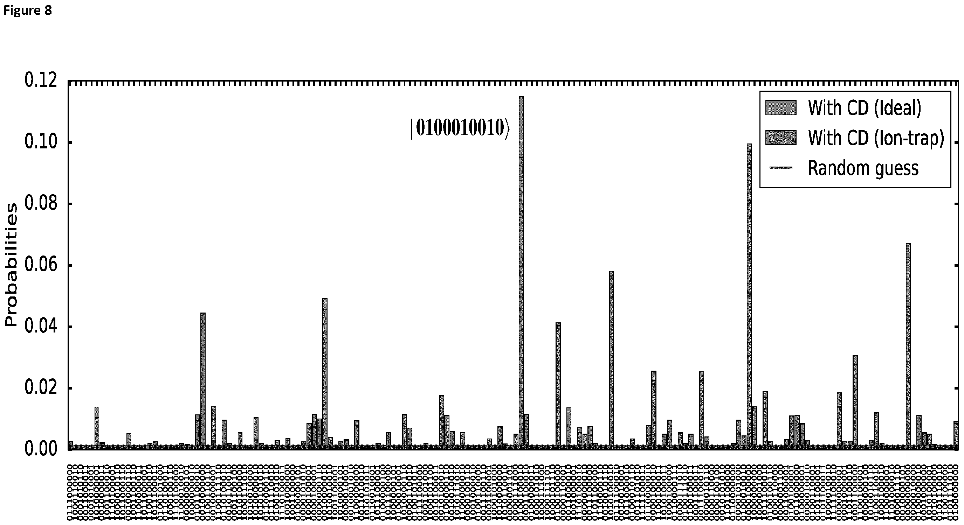

For the experimental implementation, we decompose the interaction terms using the native $ZZ(\theta)$ gates. In Fig 8, we show the final probability distribution obtained from the CD protocol using an ideal simulator as well as the experimental result from the trapped-ion system. We can see that the ground state $|0100010010\rangle$ is obtained with an 11.5% probability on an ideal simulator whereas the experimental probability is 9.7%. For the same problem, p=1 QAOA is able to give a theoretical ground state success probability of 2%. Even with p=3, QAOA is not able to go beyond 4% success probability. As an additional note, we observed an increase in minimum energy gap $\Delta_{min}$, i.e., the minimum energy gap between the ground state and the first excited state during the evolution by including the CD terms.

*Conclusion.*

It was shown how to factor a 48-bit integer on Quantinuum's trapped-ion quantum processor with the DCQF algorithm. It does not require any classical optimization routines and, at the same time, outperforms QAOA in finding the ground state. This means one can still explore the application of hybrid DCQF methods on current hardware, enhancing the presented performance. It is estimated that with a hybrid-DCQF algorithm, one could factor RSA-64 on current NISQ computers with around 20 qubits. Also, with optimized hardware adaptations, one could factor RSA-128 with 37 qubits.

Thus, the invention enables quantum advantages for industry problems with current quantum computers.

**Claims**

**1.** A method for providing a digital quantum algorithm, comprising the steps of:

- a) Providing an analog adiabatic quantum algorithm that solves a given problem and that includes a Hamiltonian function (Hamiltonian Operator),
- b) Adding at least one approximated counterdiabatic (CD) term to the Hamiltonian function of the analog quantum algorithm to obtain a counterdiabatic-enhanced adiabatic quantum algorithm, and
- c) Digitizing the counterdiabatic-enhanced adiabatic adiabatic quantum algorithm from step b) to obtain a digital quantum algorithm, in particular in the form of a digitized-counterdiabatic QC (DCDQC) solution.

**2.** The method of claim 1, wherein in step b)
the at least one approximated counterdiabatic (CD) term is a local and/or a bi-local term.

**3.** The method of claim 1 or 2, wherein in step c)

a plurality of native gates of a NISQ quantum processor are used; and/or

the digitization includes the selection of at least one CD term from a group of lower-order CD terms.

4. The method of any of claims 1 to 3, wherein in step c)
an optimization processes is used to find the minimal number of needed gates from the plurality of native gates, in particular by using a circuit optimization or a genetic algorithm.

5. The method of any of claims 1 to 4, further comprising the step of

   - Digitizing a time evolution operator (TEO), and
   - Decomposing the time evolution operator (TEO) into a product of matrix exponentials.

6. The method of any of claims 1 to 5, further comprising the step of

   - performing a circuit optimization on a hardware system that is suitable for use to solve the given problem, in particular wherein the hardware system has more than 50 qubits.

7. The method of any of claims 1 to 6, wherein the at least one approximated counterdiabatic (CD) term is enhanced by the optimization of the physical interactions to produce different digital-analog CD terms, wherein the physical interactions are selected from the group consisting of: ions, photons, cold atoms, nitrogen vacancy (NV) centers and electron spins.

8. The method of any of claims 1 to 6, which is computer-implemented.

9. A computer program (algorithm) obtained by a method of any of claims 1 to 8, in particular **characterized by** the presence of at least one approximated counterdiabatic (CD) term.

10. A method for providing a hardware system for running a digital quantum algorithm, comprising the step of:

    - implementing a digital quantum algorithm obtained by a method of any of claims 1 to 8 on a hardware system.

11. A hardware system for running a digital quantum algorithm, obtainable by:

    - implementing a digital quantum algorithm obtained by a method of claims 1 to 8 on a given hardware system,

    in particular wherein the hardware system comprises:

    an ion trap with at least 50 physical qubits;
    photonic modes with at least 50 modes;
    cold atoms with at least 50 physical qubits;
    nitrogen vacancy (NV) centers with at least 50 physical qubits; and/or
    spin qubits with at least 50 physical qubits.

12. The hardware system of claim 11, comprising:
a two-qubit gate with a fidelity of 95 %, preferably more than 100 qubits with a fidelity of 99 %.

13. A system, comprising

    - a computer program (algorithm) of claim 9, and
    - a hardware system of claim 11.

14. A quantum processor, which has been altered by running a computer program (algorithm) of claim 9 or a method of claim 10.

15. A computer-readable medium having stored thereon the computer program of claim 9 or 10.

**Figure 1**

**Figure 2**

**Figure 3**

**Figure 4**

**Figure 5**

Figure 6

Figure 7

Figure 8

**Europäisches Patentamt**
**European Patent Office**
**Office européen des brevets**

# EUROPEAN SEARCH REPORT

Application Number

EP 23 16 9040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANDARANA P ET AL: "Digitized-counterdiabatic quantum approximate optimization algorithm", ARXIV.ORG, CORNELL UNIVERSITY LIBRARY, 201 OLIN LIBRARY CORNELL UNIVERSITY ITHACA, NY 14853, 4 March 2022 (2022-03-04), XP091170050, DOI: 10.1103/PHYSREVRESEARCH.4.013141 * abstract; page 1 - page 6; figure 1 * ----- | 1-15 | INV. G06N10/60 |
| X | NARENDRA N HEGADE ET AL: "Shortcuts to Adiabaticity in Digitized Adiabatic Quantum Computing", ARXIV.ORG, CORNELL UNIVERSITY LIBRARY, 201 OLIN LIBRARY CORNELL UNIVERSITY ITHACA, NY 14853, 8 September 2020 (2020-09-08), XP081758081, * abstract; page 1 - page 9; figure 1 * ----- | 1-15 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 29 November 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAO YAN et al.** *arXiv:2212.12372, 2022*